# EUROPEAN PATENT APPLICATION

(11) **EP 1 077 418 A2**
(43) Date of publication of application: **21.02.2001**
(21) Application number: 00117293.1
(22) Date of filing: 17.08.2000
(51) Int. Cl.: G06F 17/60

(54) **E-Commerce vendor query system**

(30) Priority: 17.08.1999 US 375412
(71) Applicant: Telemessage Ltd., Petah Tikva 49348 (IL)
(72) Inventor: Levit, Guy, Tel-Aviv 66098 (IL); Noam, Camiel, Tel-Aviv 69080 (IL); Eli, David, Tel-Aviv 64733 (IL); Gil, Shapira, Tel-Aviv 46342 (IL)
(74) Representative: VOSSIUS & PARTNER

(57) **Abstract**

An electronic commerce system including data input apparatus operative to receive data input including a goods and services descriptor and an input location descriptor, a database including at least one record, the record including a vendor identifier, a goods and services category descriptor, a vendor location descriptor, and either of a vendor telephone number and a vendor e-mail address, vendor location apparatus operative to identify at least one of the vendor identifiers in the database having a goods and services category descriptor corresponding to the goods and services descriptor and a vendor location descriptor corresponding to the input location descriptor, vendor selection apparatus operative to provide in a selection window the vendor identifiers identified by the vendor location apparatus and receive at least one vendor identifier selection via the selection window, vendor query apparatus operative, in response to each of the vendor identifier selections, to provide a communication including the goods and services descriptor and a query message to the selected vendor and receive a reply therefrom, and reporting apparatus operative to provide an output including the selected vendor identifier, and the reply.

## Description

The present invention relates to electronic commerce (e-commerce) in general, and more particularly to apparatus and methods for identifying vendors of sought goods and services.

World Wide Web sites and software "agents" that help consumers find products and services for sale on the Internet are well known. Some sites and agents comb e-commerce web sites and record the goods and services they contain in databases that may be searched for specific items. Other e-commerce search engines, such as Fido the Shopping Doggie from Continuum Software of Woburn, Massachusetts, charges vendors who want their product descriptions and prices included in the Fido database. While a user may query such databases for a specific item and receive a list of vendors, wherever they may be located, and their prices for the item, it would be more desirable for the user to receive more targeted information such as a list of local vendors, local vendors who carry an item in a desired price range, and local vendors who currently have the item in stock rather than those who merely list the item for sale. It would also be desirable to query vendors for specific information regarding a desired item as part of an e-commerce search engine query.

The present invention seeks to provide improved apparatus and methods for identifying local vendors of sought goods and services and for providing current stock and other information as part of an e-commerce search engine query.

There is thus provided in accordance with a preferred embodiment of the present invention an electronic commerce system including data input apparatus operative to receive data input including a goods and services descriptor and an input location descriptor, a database including at least one record, the record including a vendor identifier, a goods and services category descriptor, a vendor location descriptor, and either of a vendor telephone number and a vendor e-mail address, vendor location apparatus operative to identify at least one of the vendor identifiers in the database having a goods and services category descriptor corresponding to the goods and services descriptor and a vendor location descriptor corresponding to the input location descriptor, vendor selection apparatus operative to provide in a selection window the vendor identifiers identified by the vendor location apparatus and receive at least one vendor identifier selection via the selection window, vendor query apparatus operative, in response to each of the vendor identifier selections, to provide a communication including the goods and services descriptor and a query message to the selected vendor and receive a reply therefrom, and reporting apparatus operative to provide an output including the selected vendor identifier, and the reply.

Further in accordance with a preferred embodiment of the present invention the data input additionally includes either of the query message and a pre-recorded query message identifier for identifying the query message.

Still further in accordance with a preferred embodiment of the present invention the vendor query apparatus is operative to establish a telephonic link with the selected vendor using the vendor telephone number corresponding to the selected vendor identifier and annunciate the communication via the telephonic link.

Additionally in accordance with a preferred embodiment of the present invention the vendor query apparatus is operative to send an e-mail message to the selected vendor using the vendor e-mail address corresponding to the selected vendor identifier.

Moreover in accordance with a preferred embodiment of the present invention the vendor query apparatus is operative to receive any of a voice reply, a DTMF reply, and an e-mail reply.

Further in accordance with a preferred embodiment of the present invention the output additionally includes the query message.

There is also provided in accordance with a preferred embodiment of the present invention a method of electronic commerce, the method including receiving data input including a goods and services descriptor and an input location descriptor, identifying, in a database including at least one record, the record including a vendor identifier, a goods and services category descriptor, a vendor location descriptor, and either of a vendor telephone number and a vendor e-mail address, at least one of the vendor identifiers having goods and services category descriptor corresponding to the goods and services descriptor and a vendor location descriptor corresponding to the input location descriptor, providing in a selection window the vendor identifiers identified in the identifying step, receiving at least one vendor identifier selection via the selection window, and in response to each of the vendor identifier selections providing a communication including the goods and services descriptor and a query message to the selected vendor, receiving a reply from the vendor, and providing an output including the goods and services descriptor and the reply.

Further in accordance with a preferred embodiment of the present invention the receiving data input step additionally includes receiving either of the query message and a pre-recorded query message identifier for identifying the query message.

Still further in accordance with a preferred embodiment of the present invention the providing a communication step includes establishing a telephonic link with the selected vendor using the vendor telephone number corresponding to the selected vendor identifier and annunciating the communication via the telephonic link.

Additionally in accordance with a preferred embodiment of the present invention the providing a communication step includes sending an e-mail message to the selected vendor using the vendor e-mail address corresponding to the selected vendor identifier.

Moreover in accordance with a preferred embodiment of the present invention the receiving a reply step includes receiving any of a voice reply, a DTMF reply, and an e-mail reply.

Further in accordance with a preferred embodiment of the present invention the providing an output step additionally includes providing the query message.

The present invention will be understood and appreciated more fully from the following detailed description taken in conjunction with the appended drawings in which:
Fig. 1 is a simplified pictorial illustration of an e-commerce system constructed and operative in accordance with a preferred embodiment of the present invention;
Fig. 2 is a simplified block diagram of elements of the system of Fig. 1 constructed and operative in accordance with a preferred embodiment of the present invention; and
Fig. 3 is a series of simplified interface representations of the system of Fig. 1, constructed and operative in accordance with a preferred embodiment of the present invention.

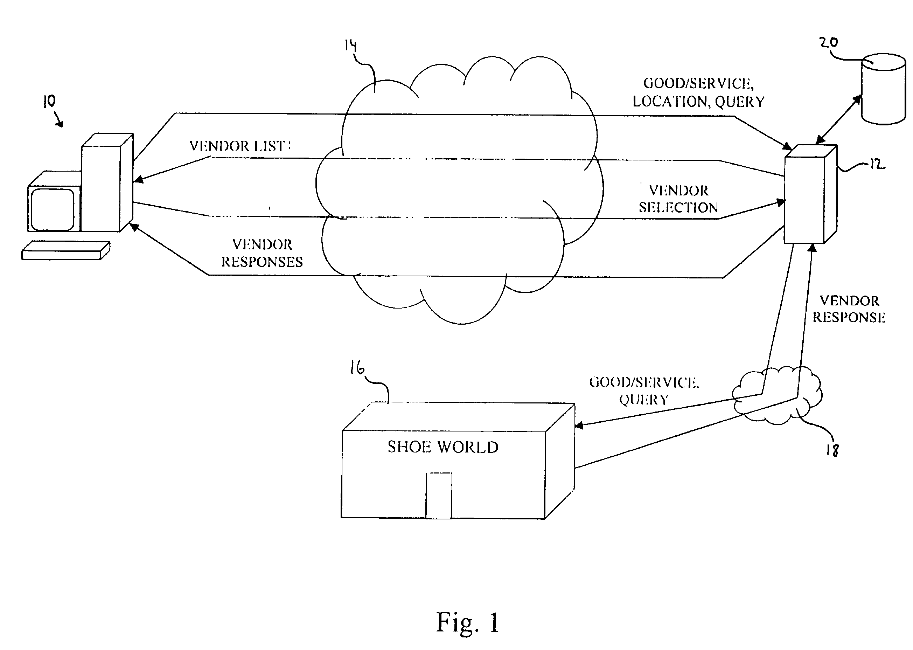

Reference is now made to Fig. 1 which is a simplified pictorial illustration of an c-commerce system constructed and operative in accordance with a preferred embodiment of the present invention. In the system of Fig. 1 a computer 10 is provided for communications with a server 12 via a network 14, typically the Internet. Server 12 is also connectable to one or more vendor establishments 16 via a network 18, which may be a telephone network or a data communications network such as the Internet, for voice and/or electronic mail (e-mail) communications therebetween. Contact information for the vendors is typically maintained in a database 20, which preferably includes one or more records, each record including a vendor identifier, one or more categories in which the vendor provides goods and services, a vendor location descriptor, including any of the vendor's street address, city, state, ZIP code, or any other location-specific information and a vendor telephone number and/or e-mail address..

Typical operation of the system of Fig. 1 begins with data being input by a user into computer 10 including a descriptor of the good or service being sought, a description of the desired location where the good or service should be found, such as a ZIP code or any other location-specific information, and either a voice or text query message or one or more identifiers of pre-recorded query messages. The data are then sent to server 12 via network 14 in accordance with standard network transmission protocols.

After it receives the input data from computer 10, server 12 then identifies the goods and services category corresponding to the descriptor of the good or service input into computer 10, accesses database 20, and compares the location descriptor input into computer 10 with the vendor location descriptors maintained in database 20, identifying any vendors in the desired location who provide the desired goods and services. Server 12 then provides a list of identified vendors to computer 10 via network 14 where one or more of the vendors listed may be selected by the user. Computer 10 then sends the list of selected vendors to server 12 which then contacts each vendor via network 18 telephonically at the vendor's telephone number stored in database 20 and/or via e-mail at the vendor's e-mail address stored in database 20 in accordance with a default communications mode predefined for the vendor in database 20 or otherwise as indicated in the vendor selection received from computer 10.

Where voice communications with a selected vendor is established, server 12 then annunciates the query message input at computer 10 or a pre-recorded query message corresponding to a query identifier input at computer 10. Where the query message is a text message, server 12 performs text-to-speech conversion using conventional techniques. Server 12 may then accept either a dual-tone multi-frequency (DTMF) response from the contacted vendor as prompted by server 12, such as 1 for "yes" and 2 for "no," or a voice response which server 12 records and/or converts to text using conventional means. Server 12 then sends the response to computer 10 via network 14.

Where e-mail communications with a selected vendor is indicated, server 12 sends via e-mail the query message input at computer 10 or a pre-recorded query message corresponding to a query identifier input at computer 10. Where the query message is a text message, server 12 may attach the message as text to the e-mail transmission or may perform text-to-speech conversion using conventional techniques and attach the speech to the e-mail transmission as a sound file. Server 12 may then accept an e-mail response from the contacted vendor which server 12 then sends to computer 10 via network 14.

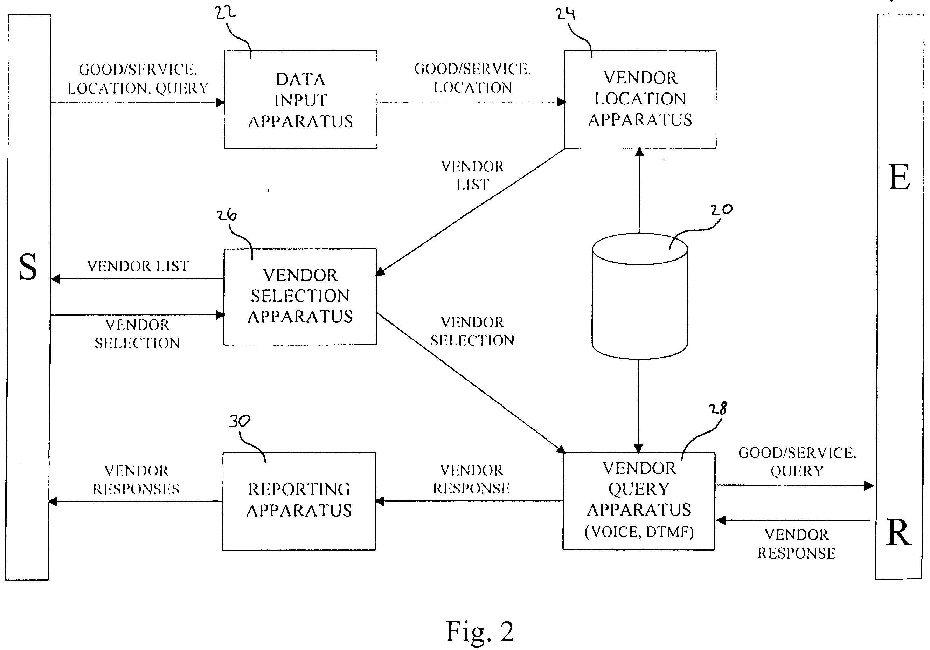

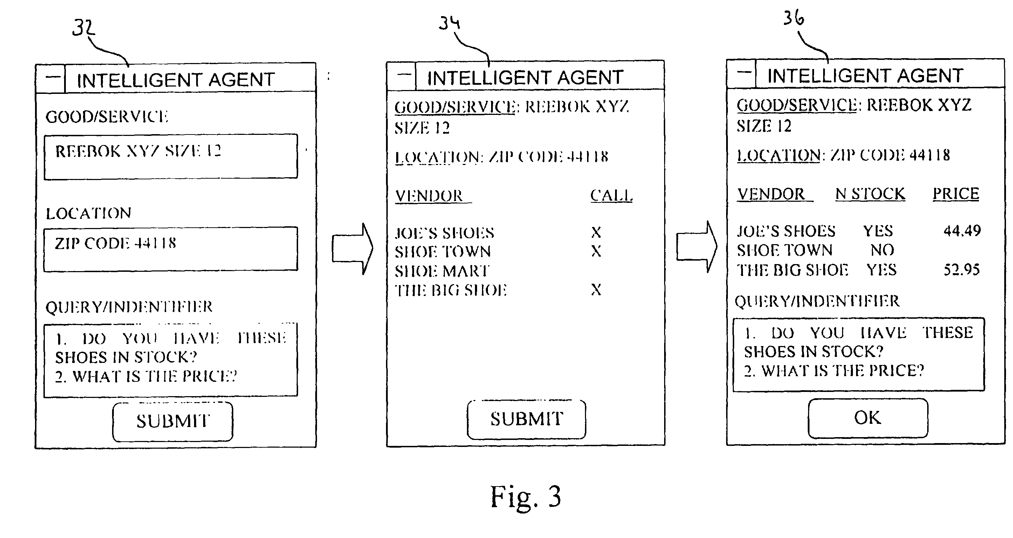

Reference is now made to Fig. 2 which is a simplified block diagram of elements of the system of Fig. 1, and Fig. 3 which is a series of simplified interface representations of the system of Fig. 1, both constructed and operative in accordance with a preferred embodiment of the present invention. Referring particularly to Fig. 2, data input apparatus 22, typically implemented at computer 10, is shown receiving data input, described hereinabove with reference to computer 10 (Fig. 1). The data input is preferably entered via a data input window 32 (Fig. 3) displayed at computer 10.

Vendor location apparatus 24, typically implemented at server 12, receives the data input from data input apparatus 22 and accesses database 20 to identify any vendors in database 20 having a goods and services category descriptor corresponding to the goods and services descriptor in the data input and having a vendor location descriptor corresponding to the input location descriptor. Vendor selection apparatus 26, typically implemented at server 12, provides the vendors identified by vendor location apparatus 24 in a selection window 34 (Fig. 3), displayed at computer 10 using conventional means, in which one or more vendors may be selected. The vendor selection is then received at vendor selection apparatus 26 and provided to vendor query apparatus 28, typically implemented at server 12, which contacts each of the selected vendors via telephone at the telephone number in database 20 corresponding to the vendor. Vendor query apparatus 28 then annunciates to the vendor the goods and services descriptor and/or either of the query message and the pre-recorded query message provided in data input window 32. Vendor query apparatus 28 may then receive a reply from the vendor as described hereinabove. Reporting apparatus 30, typically implemented at server 12, may then provide a vendor response report to computer 10 in a response window 36 (Fig. 3) preferably including the goods and services descriptor, the query message annunciated to the vendor, the vendor identifier, and the vendor's reply. The vendor response report is preferably provided in a format that may be manipulated by computer 10, such as for sorting and importing to spreadsheets as is well known in the art.

The methods and apparatus disclosed herein have been described without reference to specific hardware or software. Rather, the methods and apparatus have been described in a manner sufficient to enable persons of ordinary skill in the art to readily adapt commercially available hardware and software as may be needed to reduce any of the embodiments of the present invention to practice without undue experimentation and using conventional techniques. For example, data input apparatus 22 and vendor selection apparatus 26 may be implemented as a browser running on computer 10, in which case a form-based interface is used, such as may be provided in Hypertext Markup Language (HTML) in a web page retrieved from server 12 or previously maintained at computer 10. Alternatively data input apparatus 22 and vendor selection apparatus 26 may be implemented as dedicated client software and/or hardware implemented at computer 10 using conventional means. Data input apparatus 22 and vendor selection apparatus 26 may also be implemented at server 12, in which case a remote interface application such as UNIX TELNET may be used at computer 10 to access the relevant apparatus at server 12.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true spirit and scope of the invention.

## Claims

1. An electronic commerce system comprising:
data input apparatus operative to receive data input comprising a goods and services descriptor and an input location descriptor;
a database comprising at least one record, said record comprising a vendor identifier, a goods and services category descriptor, a vendor location descriptor, and either of a vendor telephone number and a vendor e-mail address;
vendor location apparatus operative to identify at least one of said vendor identifiers in said database having a goods and services category descriptor corresponding to said goods and services descriptor and a vendor location descriptor corresponding to said input location descriptor;
vendor selection apparatus operative to provide in a selection window said vendor identifiers identified by said vendor location apparatus and receive at least one vendor identifier selection via said selection window;
vendor query apparatus operative, in response to each of said vendor identifier selections, to provide a communication comprising said goods and services descriptor and a query message to said selected vendor and receive a reply therefrom; and
reporting apparatus operative to provide an output comprising said selected vendor identifier, and said reply.

2. A system according to claim 1 wherein said data input additionally comprises either of said query message and a pre-recorded query message identifier for identifying said query message.

3. A system according to claim 1 or 2, wherein said vendor query apparatus is operative to establish a telephonic link with said selected vendor using said vendor telephone number corresponding to said selected vendor identifier and annunciate said communication via said telephonic link.

4. A system according to claim 1 or 2, wherein said vendor query apparatus is operative to send an e-mail message to said selected vendor using said vendor e-mail address corresponding to said selected vendor identifier.

5. A system according to claim 1 or 2, wherein said vendor query apparatus is operative to receive any of a voice reply, a DTMF reply, and an e-mail reply.

6. A system according to any of claims 1 to 5 wherein said output additionally comprises said query message.

7. A method of electronic commerce, the method comprising:
receiving data input comprising a goods and services descriptor and an input location descriptor;
identifying, in a database comprising at least one record, said record comprising a vendor identifier, a goods and services category descriptor, a vendor location descriptor, and either of a vendor telephone number and a vendor e-mail address, at least one of said vendor identifiers having goods and services category descriptor corresponding to said goods and services descriptor and a vendor location descriptor corresponding to said input location descriptor;
providing in a selection window said vendor identifiers identified in said identifying step;
receiving at least one vendor identifier selection via said selection window; and
in response to each of said vendor identifier selections:
providing a communication comprising said goods and services descriptor and a query message to said selected vendor;
receiving a reply from said vendor; and
providing an output comprising said goods and services descriptor and said reply.

8. A method according to claim 7 wherein said receiving data input step additionally comprises receiving either of said query message and a pre-recorded query message identifier for identifying said query message.

9. A system according to claim 7 or 8 wherein said providing a communication step comprises establishing a telephonic link with said selected vendor using said vendor telephone number corresponding to said selected vendor identifier and annunciating said communication via said telephonic link.

10. A system according to claim 7 or 8 wherein said providing a communication step comprises sending an e-mail message to said selected vendor using said vendor e-mail address corresponding to said selected vendor identifier.

11. A system according to claim 7 or 8 wherein said receiving a reply step comprises receiving any of a voice reply, a DTMF reply, and an e-mail reply.

12. A system according to any of claims 7 to 11 wherein said providing an output step additionally comprises providing said query message.
